# EUROPEAN PATENT APPLICATION

(11) **EP 2 698 292 A1**
(43) Date of publication of application: **19.02.2014**
(21) Application number: 12771856.7
(22) Date of filing: 02.04.2012
(51) Int. Cl.: B60S 1/08, B60R 1/00

(54) **WIPER CONTROL APPARATUS**

(30) Priority: 11.04.2011 JP 2011086903
(71) Applicant: Hitachi Automotive Systems, Ltd., Hitachinaka-shi Ibaraki 312-8503 (JP)
(72) Inventor: SASADA Yoshiyuki, Hitachinaka-shi Ibaraki 312-8503 (JP)
(74) Representative: MERH-IP Matias Erny Reichl Hoffmann
(86) International application number: PCT/JP2012/058801
(87) International publication number: WO 2012/141017

(57) **Abstract**

A wiper control apparatus is provided which detects a visibility state of a window of a moving body and controls a wiper to a target visibility state with less erroneous operation and in a short time. The wiper control apparatus provided in a vehicle and for controlling the wiper operating on the window of the vehicle includes a wiper position detection unit to detect a position of the wiper on the window of the vehicle, a recognition rate calculation unit to calculate a recognition rate of an image taken by an imaging device when the position of the wiper detected by the wiper position detection unit is a previously determined position, a target recognition rate setting unit to set a target recognition rate from the calculated recognition rate, a comparison unit to compare the recognition rate with the target recognition rate and to output a comparison result, and a wiper operation speed determination unit to determine an operation speed of the wiper based on the comparison result.

## Description

### [Technical Field]

The present invention relates to a wiper control apparatus for controlling a wiper operating on a window of a moving body such as an automobile.

### [Background Art]

As a technique to automatically operate a wiper, there is Patent Literature 1. Patent Literature 1 discloses a visibility state detection apparatus for detecting a visibility state through a windshield of a moving body, which includes a camera to take in an image of a comparable object outside the moving body through the windshield, and a judgment unit to judge the state of the windshield from the state of the image of the comparable object taken in by the camera.

### [Patent Literature 1] JP-A-10-111249

### [Disclosure of the Invention]

### [Technical Problem]

In Patent Literature 1, the visibility state is detected, an internal target detection value (distance dispersion, etc.) is made a threshold, and the wiper control is performed. Since various factors influence the detection value, there are problems that if the threshold is not expected to be inappropriate, the detection value exceeds the threshold and erroneous operation increases, and if the accuracy is attempted to be raised, the time required for the control becomes long.

An object of the invention is to provide a wiper control apparatus which detects a visibility state of a window of a moving body and controls a wiper to a target visibility state with less erroneous operation and in a short time.

### [Solution to Problem]

In order to solve the problem, a wiper control apparatus of the invention includes a wiper position detection unit to detect a position of a wiper on a window of a vehicle, a recognition rate calculation unit to calculate a recognition rate of an image taken by an imaging device when the position of the wiper detected by the wiper position detection unit is a previously determined position, a target recognition rate setting unit to set a target recognition rate from the calculated recognition rate, a comparison unit to compare the recognition rate with the target recognition rate and to output a comparison result, and a wiper operation speed determination unit to determine an operation speed of the wiper based on the comparison result.

### [Advantageous Effects of Invention]

According to the invention, a wiper control apparatus can be provided which detects a visibility state of a window of a moving body and controls a wiper to a target visibility state with less erroneous operation and in a short time.

### [Brief Description of Drawings]

[FIG. 1] FIG. 1 is a view showing a mount position of a camera seen from a side direction of a vehicle according to the invention.
[FIG. 2] FIG. 2 is a view showing the mount position of the camera seen from a front direction of the vehicle according to the invention.
[FIG. 3] FIG. 3 is a view showing an example of a control method of a wiper control apparatus of the invention.
[FIG. 4] FIG. 4 is a view showing a relation between a wiper operation of the wiper control apparatus of the invention and a recognition rate.
[FIG. 5] FIG. 5 is a view showing an example of the definition of the recognition rate of the wiper control apparatus of the invention.
[FIG. 6] FIG. 6 is a view showing another example of the definition of the recognition rate of the wiper control apparatus of the invention.
[FIG. 7] FIG. 7 is a view showing object pixels of an imaging device for recognition rate calculation of the wiper control apparatus of the invention.
[FIG. 8] FIG. 8 is a view for explaining a wiper position detection unit of the wiper control apparatus of the invention.
[FIG. 9] FIG. 9 is a view showing the definition of a recognition rate when wiper control is performed by two cameras in the wiper control apparatus of the invention.

### [Reference Signs List]

- 1: camera
- 2: window
- 3: wiper
- 4: wiper position detection unit
- 5: recognition rate calculation unit
- 6: storage device
- 7: target recognition rate setting unit
- 8: comparison unit
- 9: wiper operation speed determination unit
- 18: taken image
- 19: noted pixel
- 20: adjacent pixel

### [Description of Embodiments]

Hereinafter, examples will be described with reference to the drawings.

### [Example 1]

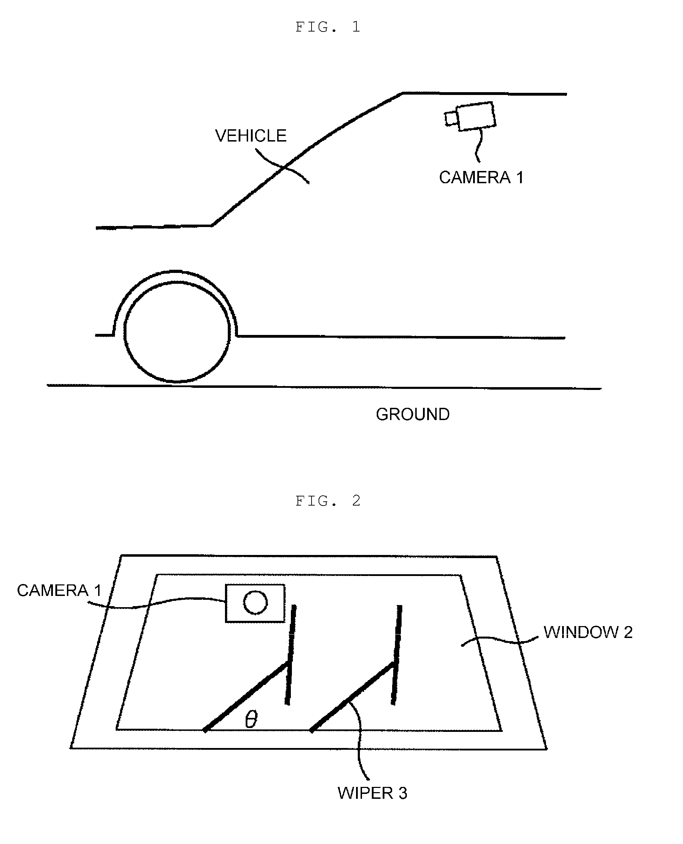

In this example, an example of a wiper control apparatus of the invention will be described with reference to FIG. 1 to FIG. 8.

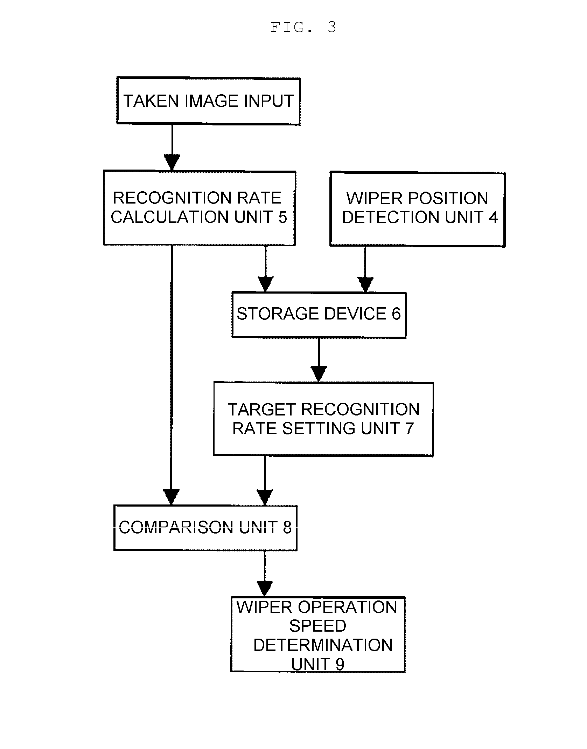

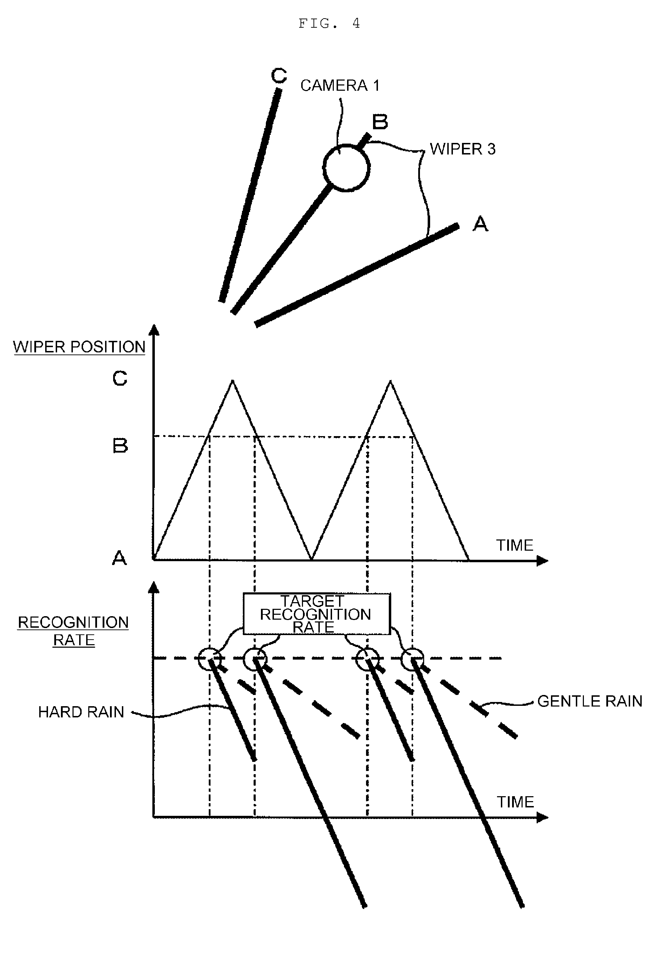

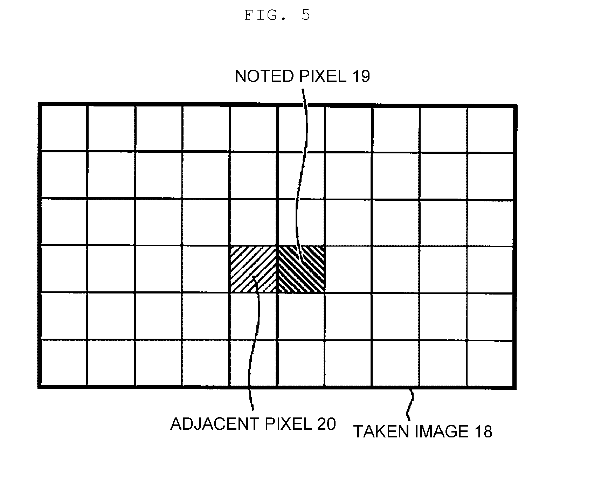

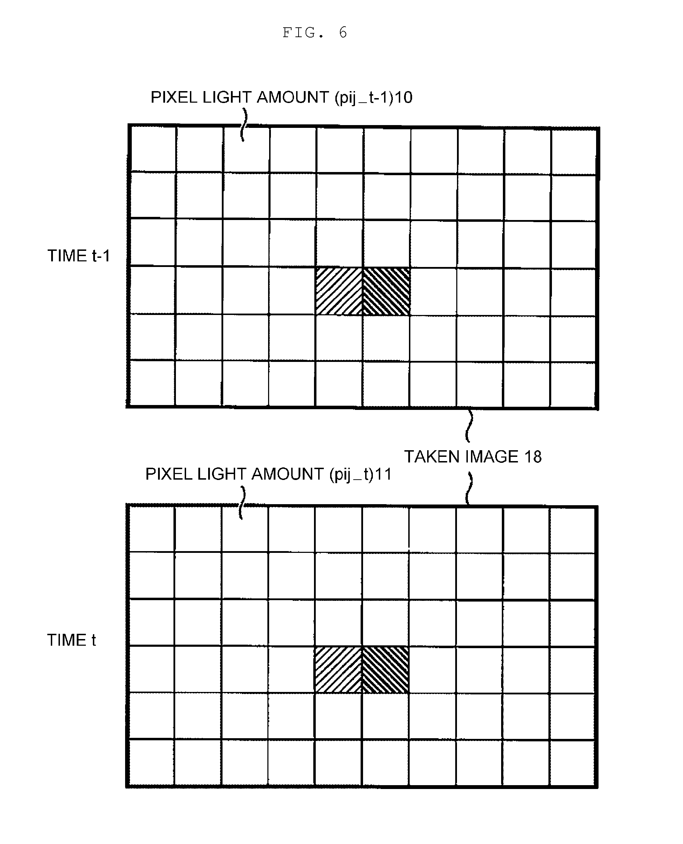

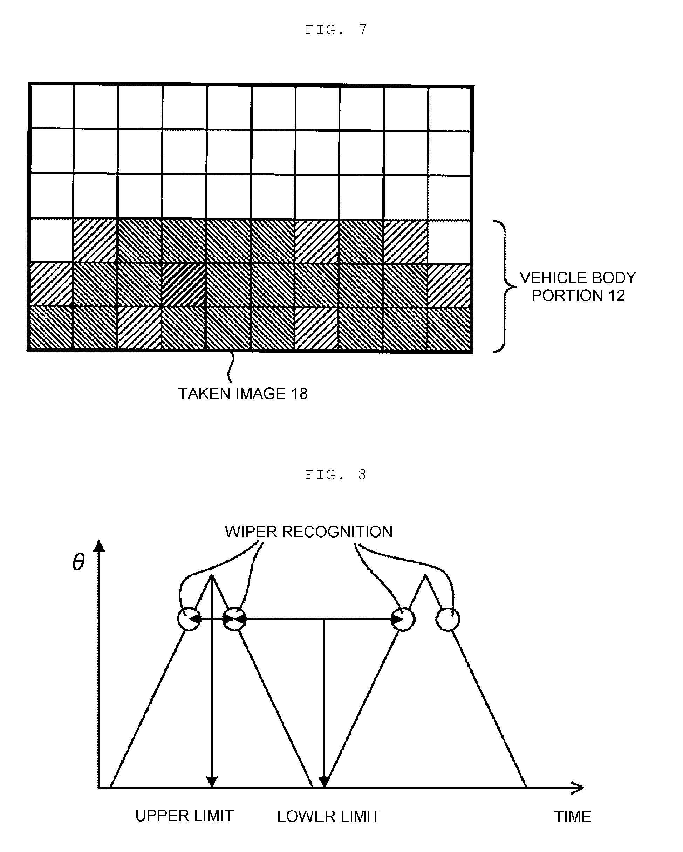

FIG. 1 shows a mount position of a camera 1 as an imaging device seen from a side direction of a vehicle, and FIG. 2 shows it seen from a front direction. FIG. 3 shows a wiper control method of a wiper control apparatus, FIG. 4 shows a relation between a wiper operation and a recognition rate, and FIG. 5 and FIG. 6 show examples of definition of the recognition rate. FIG. 7 shows object pixels of an imaging device for recognition rate calculation, and FIG. 8 shows an example of a wiper position detection unit.

The camera 1 as the imaging device to recognize the outside world through a window 2 as a window of a vehicle is placed on the vehicle. The window 2 is provided with a wiper 3. The camera 1 monitors a range in which the wiper 3 wipes. When the wiper 3 starts to operate, θ shown in FIG. 2 performs a simple oscillation.

Next, an example of a wiper control method of the wiper control apparatus of the invention will be described with reference to FIG. 3.

A wiper position detection unit 4 is provided in the wiper 3, and detects the position of the wiper 3 on the window 2. As a result of the detection by the wiper position detection unit 4, when the wiper 3 is located at a previously determined specified position, a recognition rate calculation unit 5 calculates a recognition rate of an image taken by the camera 1, and the calculated recognition rate is stored in a storage device 6. When stored in the storage device 6, the calculated recognition rate may be correlated with the position of the wiper 3 and may be stored.

A target recognition rate setting unit 7 sets a target recognition rate of the taken image, and a comparison unit 8 compares the recognition rate calculated by the recognition rate calculation unit 5 with the target recognition rate set by the target recognition rate setting unit 7. A wiper operation speed determination unit 9 determines the operation speed of the wiper 3 based on the comparison result. For example, as a result of the comparison, if a difference value between the calculated recognition rate and the target recognition rate is larger than a previously determined value (if the visibility state of the window 2 is bad), the wiper operation speed determination unit 9 outputs a control signal to increase the operation speed of the wiper 3. If the difference value between the calculated recognition rate and the target recognition rate is smaller than the previously determined value (if the visibility state of the window is excellent), the wiper operation speed determination unit 9 outputs a control signal to decrease or stop the wiper operation. Besides, plural kinds of control signals for wiper operation speed are stored in advance, and an optimum control signal may be outputted by selecting one of the plural control signals based on the comparison result of the comparison unit 8. Incidentally, from FIG. 4, the target recognition rate setting unit 7 previously sets the recognition rate of the image, which is taken by the camera 1 after the wiper 3 wipes, as the target recognition rate.

### <Relation between Wiper Operation and Recognition Rate>

The details of a relation between the wiper operation and the recognition rate will be described with reference to FIG. 4.

A lower limit position of wiper position in the vertical direction (on the side close to the ground) is made A, an upper limit position is made C, and a front position of the camera 1 is made B. The wiper 3 performs a repeating operation of A → B → C → B → A → in a time axis. At this time, the recognition rate of the camera 1 becomes highest just after B, and thereafter, as long as the position is not returned to the position B again, the recognition rate deteriorates with the time axis. At the time of rain, since raindrops are attached to the surface of the window 2 with the time, the recognition rate deteriorates. However, just after B, since the wiper 3 wipes in the monitor range of the camera 1, the recognition rate becomes high.

As described before, the recognition rate just after B as the target recognition rate is estimated from the recognition rate at the specified position of the wiper 3, and the target value estimated from the factor of fluctuation of the recognition rate by the wiper 3 is set. By this, the influence on the recognition rate by the change of external environment except for what can be improved by the wiper 3 can be cancelled. Thus, an erroneous operation can be decreased and it is said to be excellent. The difference between the target value and the actual recognition rate is made proportional to the wiper operation speed, so that a remarkable effect is obtained that the wiper control can be settled to the target in a short time.

### <Example of Recognition Rate>

FIG. 5 shows an example of the recognition rate. The recognition rate is set from a change amount in light amount between a noted pixel 19 in a taken image 18 taken by the camera 1 and an adjacent pixel 20 adjacent to the noted pixel 19. When a raindrop is attached to the window 2, a focus value of the camera 1 optimized when there is no raindrop is shifted by the lens effect of the raindrop. That is, when an object is monitored, the change amount in light amount between the noted pixel 19 and the adjacent pixel 20 becomes small. Accordingly, when the recognition rate is defined as stated above, as the amount of attached raindrops increases, the change amount in light amount decreases over the whole area of the taken image 18. Thus, since the deterioration of the recognition rate with the time shown in FIG. 4 can be reproduced, it is said to be one of excellent indexes.

FIG. 6 shows another example of the recognition rate. The recognition rate is set from a difference amount in light amount between an image of a just previous time frame and an image of a current time frame in the taken image 18 taken by the camera 1. When the pixel light amount is represented by p, a row direction is represented by i, a column direction is represented by j, and a time axis is represented by t, the respective pixel light amounts at time t-1 and t are pij_t-1(10) and pij_t(11).

In this example, the recognition rate is the total sum of the pixel light amounts pij_t ∼ pij_t-1 over the taken image area.

When a raindrop is attached to the window 2, the focus value of the camera 1 optimized when there is no raindrop is shifted by the lens effect of the raindrop. That is, a change in light amount occurs before and after the attachment of the raindrop. Accordingly, when the recognition rate is defined as stated above, as the amount of attached raindrops increases, the change amount in light amount increases over the whole taken image area. Thus, the deterioration of the recognition rate with the time shown in FIG. 4 can be reproduced, and it is said to be one of excellent indexes.

### <About Recognition Object>

FIG. 7 shows an example of a pixel range of a taken image 18 as an object when the recognition rate is calculated.

When the camera 1 is mounted in the vehicle, the camera is arranged so that a vehicle body portion 12 falls within the viewing angle of the camera 1, and the calculation of the recognition rate is performed on the vehicle body portion 12 falling within the viewing angle. By this, since the change of the recognition rate due to the change of the object can be reduced, an erroneous operation of the wiper 3 can be reduced.

### <Wiper Position Detection Unit>

FIG. 8 shows an example of the wiper position detection unit 4.

The wiper 3 is recognized twice by image recognition in the movement process of the wiper 3 of the upper limit in the vertical direction → the lower limit and the lower limit → the upper limit, respectively, and the recognition is repeated thereafter. This is because the operation range of the wiper 3 is mechanically previously determined, and the upper limit position of the wiper 3 in the vertical direction and the lower limit position are previously determined. Accordingly, two intermediate times are respectively made the upper and lower limit positions of the wiper position, and a position of the wiper 3 at an arbitrary time is estimated by temporal linear interpolation, so that wiper position detection can be performed. By this, even if there is no sensor for detecting the wiper position, the wiper position can be estimated, and this is excellent. Further, even if a vehicle is changed, the recognition algorism is not changed. Thus, as compared with the case where information of a wiper position sensor is used, since less vehicle adaptation is required, this is excellent.

Incidentally, with respect to the operation speed of the wiper, the operation speed is made constant in the range of one simple oscillation. Thus, the change of the wiper speed is performed only at the base point of the specified position where the recognition rate is measured.

### [Example 2]

In this example, a description is made on an example of a wiper control apparatus in which the camera 1 as the imaging device of the example 1 is not a single body, and wiper control is performed by plural cameras. For example, a wiper control apparatus performs the wiper control by a stereo camera using two cameras.

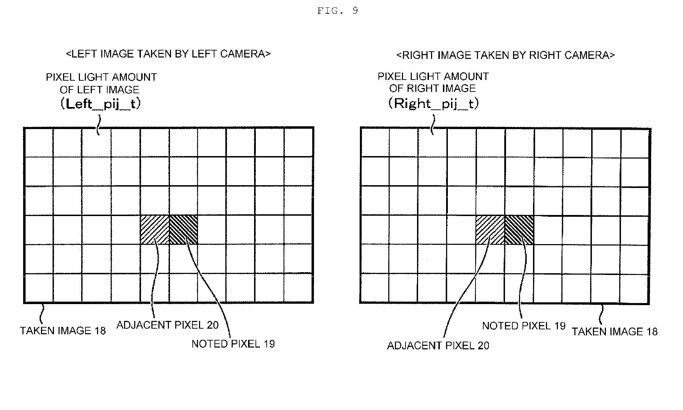

FIG. 9 shows an example of a recognition rate when an image is taken by using two cameras. In a state where one camera (left camera) and the other camera (right camera) are arranged side by side in the right and left horizontal direction, when a pixel of a taken image 18 of the left mount camera in the traveling direction is denoted by Left, and a pixel on the right side is denoted by Right, each pixel light amount is Left_pij_t(12), Right_pij_t(13).

In this example, the recognition rate is the total sum of Left_pij_t ∼ Right_pij_t over the taken image area. When a raindrop is attached to the window 2, the focus value of the camera 1 optimized when there is no raindrop is shifted by the lens effect of the raindrop. That is, a change in light amount occurs before and after the attachment of the raindrop. Since raindrops on the window 2 seen from the right and left cameras 1 are different, the change amount in light amount over the whole taken image area becomes large. Thus, since the deterioration of the recognition rate with the time shown in FIG. 4 can be reproduced, it is said to be one of excellent indexes.

Besides, inner parameters of the right and left cameras are derived from the imaging result, and the change amount thereof is defined as the recognition rate. When a raindrop is attached to the window 2, the inner parameter is changed by the lens effect of the raindrop from that obtained when there is no raindrop. That is, the change of the value of the inner parameter occurs before and after the attachment of the raindrop. Accordingly, when the recognition rate is set from the change amount of the inner parameters, the deterioration of the recognition rate with the time shown in FIG. 4 can be reproduced similarly, and it is said to be one of excellent indexes.

Various merits of the single camera are obtained also in the case of the plural cameras.

## Claims

1. A wiper control apparatus provided in a vehicle and for controlling a wiper operating on a window of the vehicle, comprising:
a wiper position detection unit to detect a position of the wiper on the vehicle window;
a recognition rate calculation unit to calculate a recognition rate of an image taken by an imaging device when the position of the wiper detected by the wiper position detection unit is a previously determined position;
a target recognition rate setting unit to set a target recognition rate from the calculated recognition rate;
a comparison unit to compare the recognition rate with the target recognition rate and to output a comparison result; and
a wiper operation speed determination unit to determine an operation speed of the wiper based on the comparison result.

2. The wiper control apparatus according to claim 1, wherein
the recognition rate is set from a change amount in light amount between a previously determined noted pixel and an adjacent pixel adjacent to the noted pixel in the taken image.

3. The wiper control apparatus according to claim 1, wherein
the recognition rate is set from a change amount between a light amount of a taken image of a just previous frame and a light amount of a taken image of a current frame.

4. The wiper control apparatus according to claim 1, wherein
the previously determined position is a position just after the wiper exceeds an imaging range of the imaging device.

5. The wiper control apparatus according to claim 1, wherein
an inner parameter of one imaging device and an inner parameter of the other imaging device are derived, and the recognition rate is set from a change amount of the derived inner parameters.
